# EUROPÄISCHE PATENTSCHRIFT

(11) **EP 2 655 533 B1**
(45) Veröffentlichungstag und Bekanntmachung des Hinweises auf die Patenterteilung: **18.07.2018**
(21) Anmeldenummer: 11796656.4
(22) Anmeldetag: 06.12.2011
(51) Int. Cl.: C09J 7/00

(54) **VERWENDUNG (UND HERSTELLUNG) EINER GEKREPPTEN POLYMILCHSÄUREFOLIE**
USE (AND PRODUCTION) OF A CREPED POLYLACTIC ACID FILM
UTILISATION (ET FABRICATION) D'UNE FEUILLE D'ACIDE POLYLACTIQUE CRÊPÉE

(30) Priorität: 20.12.2010 DE 102010063597
(43) Veröffentlichungstag der Anmeldung: 30.10.2013
(73) Patentinhaber: tesa SE, 22848 Norderstedt (DE)
(72) Erfinder: SPIES, Manfred, 24576 Bad Bramstedt (DE)
(86) Internationale Anmeldenummer: PCT/EP2011/071832
(87) Internationale Veröffentlichungsnummer: WO 2012/084477

(56) Entgegenhaltungen:
- DE-A1-102005 004 789
- US-A1- 2004 005 136
- DATABASE WPI Week 200636 Thomson Scientific, London, GB; AN 2006-347145 XP002691367, & JP 2006 124446 A (CI KASEI CO LTD) 18. Mai 2006 (2006-05-18)

## Beschreibung

Die Erfindung betrifft die Verwendung und Herstellung einer gekreppten Polymilchsäurefolie als Trägermaterial für Haftklebebänder.

Polymilchsäuren oder Polylactide (kurz PLA) sind Polyester auf Basis von Milchsäure, aus deren Lactid sie durch Ringöffnungspolymerisation hergestellt werden kann. Polymilchsäuren sind thermoplastische Kunststoffe, die aus Milchsäuremolekülen aufgebaut sind. Lactide sind natürlichen Ursprungs und lassen sich durch Vergärung von Melasse oder durch Fermentation von Glucose mit Hilfe von verschiedenen Bakterien herstellen. Das Polymer als Polyhydroxycarbonsäure ist vollständig kompostierbar und biologisch abbaubar. Abbauprodukte sind Wasser und Kohlendioxid. Die thermische Stabilität und die mechanischen Eigenschaften lassen sich durch Compoundierung mit anderen Polymeren wie zum Beispiel Polyolefinen in weiten Bereichen verändern, wobei die Kompostierbarkeit und die biologische Abbaubarkeit mit zunehmenden Gehalt an nicht kompostierbar und biologisch abbaubaren Additiven reduziert wird.

Polymilchsäure wird als resorbierbares chirurgisches Nahtmaterial und als Verkapselungsmaterial für Pharmaka eingesetzt. Copolymere aus L-Milchsäure und ε-Caprolacton sind biologisch abbaubare orthopädische Reparaturmaterialien für zum Beispiel Knochenreparaturen.
Die Herstellung und Verwendung von Polymilchsäurefolien für den Bereich der Verpackung, des Landwirtschafts- und Gartenbaus und der Medizintechnik ist hinreichend bekannt.

Aufgrund der Tatsache, dass ökologische Aspekte, die die biologische Abbaubarkeit betreffen, auch für Haftklebebänder eine immer wichtigere Rolle spielen, wurden in der Vergangenheit auch Haftklebebänder vorgestellt, die als Trägermaterial biologisch abbaubare Folien verwenden, basierend auf Polymilchsäure oder Compounds mit anderen nicht biologisch abbaubaren thermoplastischen Polymeren oder Copolymeren. Diese Klebebänder basieren auf Trägermaterialien aus Folien, die aus einem üblichen Extrusions- oder Gieß (Cast)-Prozess stammen und die im Anschluss gegebenenfalls einer Reckung in Längs- oder Querrichtung unterworfen werden.

Selbstklebende Abdeckbänder, im Folgenden als Abdeckklebeband bezeichnet, müssen einige wesentliche Eigenschaften aufweisen, damit sie die besonderen an sie gestellten Anforderungen erfüllen. Dies sind - ohne dass diese Aufstellung den Anspruch auf Vollständigkeit erhebt - eine geringe Dicke, eine hohe Zugfestigkeit (Höchstzugkraft), eine gute Dehnbarkeit (Reißdehnung), eine ausreichende aber nicht zu hohe Klebkraft, die rückstandsfreie Wiederablösbarkeit nach den Beanspruchungen der eigentlichen Anwendung, die gute Haftung von Anstrichstoffen auf der Rückseite, die Beständigkeit gegenüber Farbdurchschlag, die Beständigkeit gegenüber Feuchtigkeit und eine dosierte Klebkraft auf der eigenen Rückseite.
Während einige der Eigenschaften auf die Klebmasse oder andere Funktionsschichten des Abdeckklebebands zurückzuführen sind, so basieren die Dehnbarkeit und die Zugfestigkeit wesentlich auf den physikalischen Eigenschaften des verwendeten Trägermaterials.

Deshalb werden für Abdeckklebebänder bevorzugt Papierträger und dann solche eingesetzt, die durch die Art des verwendeten Zellstoffes, durch den Mahlgrad und durch bestimmte chemische Hilfsmittel eine definierte Zugfestigkeit und durch besondere Verfahrensschritte wie der Kreppung oder das Clupak-Verfahren mit einer definierten Dehnbarkeit ausgestattet sind.
Diese Rohstoffe und Verfahrensschritte sind ausschließlich der Kunst des Papiermachers überlassen und stehen dem Hersteller von Abdeckklebebändern daher nicht zur Verfügung, da dieser im Regelfall das Rohpapier als Basis der Abdeckklebebands zukauft.

Insbesondere die Dehnbarkeit ist aber eine unverzichtbare Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist. Das Abdeckklebeband kann bei der Handapplikation weichen Konturen perfekt nachgeführt werden und führt so zu einer sauberen, unterläuferfreien Farbkante. Die dafür erforderliche Dehnung in Längsrichtung liegt bei sogenannten Flachkrepps im Bereich von 10 %, bei sogenannten Hochkrepps um 50 %. Zugfestigkeit und Dehnung sind so aufeinander abgestimmt, dass es problemlos gelingt, während der manuellen Applikation an der Außenkurve des Abdeckklebebands einen Teil der Dehnung ohne Rissgefahr herauszuziehen und dadurch eine Kurve zu erzeugen.

Für derartige Anwendungen werden heute Haftklebebänder auf Basis imprägnierter Papiere verwendet. Derartige Trägermaterialien sind aufgrund des Papieranteils biologisch abbaubar. Die Imprägnierung, die meist auf einem Styrol-Butadien-Latex oder einer Polyacrylatdispersion basiert, verhindert jedoch eine biologische Abbaubarkeit des Haftklebebandes.

Für bestimmte Anwendungen im Bereich Abdecken/Schützen sind jedoch Haftklebebänder gewünscht, die zusammen mit der Abdeckung, die ein Papier oder eine biologisch abbaubare Folie sein kann, in einer Art und Weise entsorgt werden kann, die eine biologische Abbaubarkeit beider Materialien voraussetzt wie zum Beispiel bei einem Kompostierungsprozess. Haftklebebänder auf Basis hochgeleimter Papiere zeigen nicht die nötige Resistenz gegenüber Feuchtigkeitseinfluss, in diesem Zuge scheiden derartige Papiere als Trägermaterialien für Haftklebemassen aus.

Aufgabe der Erfindung ist es, hier Abhilfe zu schaffen und eine Möglichkeit aufzuzeigen, wie Haftklebebänder für den Bereich Abdecken und Schützen zugänglich sind, die das Eigenschaftsprofil von üblichen imprägnierten gekreppten Papier-Haftklebebändern zeigen, bei denen aber das Trägermaterial oder das Trägermaterial und die Haftklebemasse und damit das gesamte Haftklebeband biologisch abbaubar sind.

Gelöst wird diese Aufgabe durch die Verwendung eines speziellen Polymilchsäureträgers.

Demgemäß betrifft die Erfindung die Verwendung eines gekreppten Polymilchsäureträgers als Trägermaterial in einem Klebeband, das zum temporären Abdecken und Schützen des mit dem Klebeband ausgerüsteten Untergrunds dient, wobei das Trägermaterial zumindest einseitig mit einer Klebebeschichtung versehen ist und wobei der Polymilchsäureanteil im Trägermaterial größer oder gleich 50 Gew.-% ist. In einer ersten vorteilhaften Ausführungsform ist die Klebemasse biologisch abbaubar, so dass das erfindungsgemäße Klebeband nur bestehend aus Trägermaterial und Klebemasse vollständig biologisch abbaubar ist.

Gekreppte dehnfähige polymere Trägermaterialien für Haftklebebänder, die biologisch abbaubar sind, sind neuartig und als Trägermaterial für Haftklebebänder unbekannt.

Für die Herstellung einer gekreppten Polymilchsäurefolie wird eine in einem Extrusions- oder Cast-Prozess hergestellte Milchsäurefolie über eine Abwicklungseinrichtung mit einem Gleitmittel versehen an eine beheizbare Vakuumtrommel herangeführt. Der Eintrag des Gleitmittels in das Folienmaterial kann erfolgen, indem bereits in dem Extruder ein geeignetes Gleitmittel wie zum Beispiel Ecoflex Batch SL1 zu dem Compound zudosiert wird. Alternativ kann das Folienmaterial aber auch mit Wasser benetzt oder durch ein mit Wasser oder einem anderen Gleitmittel gefülltes Bad geführt werden. Denn es erweist sich als vorteilhaft, die zu kreppende Rohfolie vor dem Aufbringen auf die Vakuumwalze mit einem Gleitmittel zu benetzen, um eine gleichmäßige Kreppung beim Aufstauen zu erzielen.

Die Saugöffnungen auf der zylindrischen Vakuumtrommel können entlang der Höhe des Zylinders linienförmig angeordnet sein. Das an der Vakuumtrommel anliegende Folienband wird mit einem feststehenden Rakel gestaut. Das auf diese Weise gestaute Folienband wird in Abhängigkeit des gewünschten Kreppungsgrades mit einer gegenüber der Geschwindigkeit der Vakuumtrommel verminderten Abzugsgeschwindigkeit über eine Kühlwalze von der Mantelfläche abgezogen, in eine Kühlzone eingefahren und auf einer nachgeschalteten zylindrischen Walze aufgewickelt. Alle Walzen der Anlage sollten aufgrund der geringen Dimensionsstabilität der Trägermaterialien bei höheren Temperaturen angetrieben sein, vorzugsweise sind sie es auch. Die Temperatur der beheizbaren Vakuumtrommel ist in Abhängigkeit des zu kreppenden Material so zu wählen, dass sie einerseits möglichst gering sein sollte, um eine entsprechende Dimensionsstabilität der Folie zu erhalten, andererseits sich dem Erweichungspunkt des Folienmaterials nähern sollte, um den Kreppprozess zu begünstigen.

Die Differenz zwischen der Mantelgeschwindigkeit und der Abzugsgeschwindigkeit bestimmt den Grad der Kreppung.
Der Kreppungsgrad kann beliebig eingestellt werden, liegt aber üblicherweise zwischen 10 und 100 %, bevorzugt 20 und 80 %

Eine charakteristische Größe des Trägermaterials im Sinne der vorliegenden Erfindung ist die Reißdehnung (RD). Sie wird üblicherweise als Endpunkt des Kraft-Dehnungsdiagrammes bei der Zugprüfung des Prüfstreifens ermittelt und in % bezogen auf die Ursprungslänge angegeben. Eine hohe RD ist unerlässlich bei der faltenfreien Kurvenverklebung von Abdeckklebebändern und bei der Verklebung auf sphärischen Untergründen. In diesen Fällen darf sich das Klebeband weder teilweise vom Untergrund lösen, noch an den gedehnten Kanten einreißen, da das zu Farbunterläufern beziehungsweise zum Reißen beim Demaskieren führen würde.

Vorzugsweise weist der Polymilchsäureträger eine höhere Längs-Dehnbarkeit als Quer-Dehnbarkeit auf, und zwar weiter vorzugsweise in Längsrichtung eine Reißdehnung von mindestens 15 %, bevorzugt aber mindestens 20 % und in Querrichtung eine Reißdehnung von mindestens 5 %, bevorzugt aber mindestens 10 % und ganz bevorzugt mindestens 15 %.

Das Trägermaterial besteht bevorzugt aus reiner Polymilchsäure, kann aber auch aus Polymilchsäure/Polyester-Compounds, beispielsweise vom Typ Ecovio® (BASF), aliphatisch-aromatische Copolyester, beispielsweise vom Typ Ecoflex® (BASF), Polyhydroxyalkanoaten (PHA), Polybutylenadipatterephthalat (PBAT), Polybutylensuccinat (PBS), Stärke oder Cellulose bestehen oder auch aus Compounds untereinander oder Compounds mit Polyolefinen oder Ölen.
Erfindungsgemäß ist der Polymilchsäureanteil im Träger vorzugsweise größer oder gleich 50 Gew.-%, weiter vorzugsweise zwischen 50 und 99,9 Gew.-%, besonders bevorzugt zwischen 65 bis 99,9 Gew.-% und ganz besonders bevorzugt zwischen 80 und 99,9 Gew.-%.
Die hier genannten bevorzugten Anteile von Polymilchsäure gelten auch für aufgeführten Compounds.
Vorzugsweise wird die Polymilchsäure mit anderen verträglichen biologisch abbaubaren Polymeren compoundiert, damit eine sehr gute biologische Abbaubarkeit erhalten bleibt.

Das Flächengewicht des Trägermaterials liegt vorzugsweise bei 20 bis 250 g/m², weiter bevorzugt bei 30 bis 200 g/m², ganz weiter bevorzugt bei 70 bis 150 g/m².

Vorzugsweise ist die Klebemasse eine lösemittelbasierte oder lösemittelfreie Selbstklebemasse, vorzugsweise basierend auf Naturkautschuk, Polyacrylaten, Styrolblockcopolymeren, Ethylenvinylacetat, Polyurethan, Poly-alpha-olefinen, Polyisobutylen, Styrol-Butadien-Kautschuk, vorzugsweise eine biologisch abbaubare Selbstklebemasse wie eine Polyester- oder Polyurethanhaftklebemasse.
Die Beschichtung des Trägermaterials kann Beschichtung im Transfer oder direkt (Düse, Kalander) erfolgen.
Eine Selbst- oder Haftklebmasse ist eine viskoelastische Masse, die bei Raumtemperatur in trockenem Zustand permanent klebrig und klebfähig bleibt. Die Klebung erfolgt durch leichten Anpressdruck sofort auf fast allen Substraten.

Das erfindungsgemäße Klebeband weist gemäß einer ersten vorteilhaften Ausführungsform die folgenden Eigenschaften auf, um beispielsweise in der Verwendung als Abdeckband in Lackierprozessen hervorragend geeignet zu sein:
- eine Klebkraft auf Stahl von mindestens 1,5 N/cm, vorzugsweise bis zu 2,5 N/cm
- einen Aufziehquotienten aus der Abzugskraft vom Haftgrund nach der Anwendung und der Klebkraft auf Stahl von kleiner 2 und
- einen Rolling Ball Tack von kleiner als 100 mm

Der Masseauftrag (Beschichtungsstärke) der Klebemasse liegt vorzugsweise zwischen 20 und 200 g/m², weiter vorzugsweise zwischen 25 und 75 g/m², ganz besonders vorzugsweise zwischen 30 und 50 g/m².

Das erfindungsgemäße Klebeband wird dadurch gebildet, dass auf den Träger partiell oder vollflächig einseitig die Klebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin können die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Das Trägermaterial kann vor dem Zusammenbringen mit der Klebemasse (auf der Streich-, auch Beschichtungsseite genannt) chemisch wie durch Primerung oder durch eine physikalische Vorbehandlung wie Corona vorbereitet werden.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Des Weiteren kann das Trägermaterial rück- oder oberseitig, also der Klebemassenseite gegenüberliegend, einer antiadhäsiven physikalischen Behandlung oder Beschichtung unterzogen sein, insbesondere mit einem Trennmittel oder Release ausgerüstet sein. Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, zum Beispiel Silikone oder Fluorsilikonverbindungen, zum Beispiel auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und harnstoffmodifizierte Silikone mit einem Silikon-Gewichtsanteil von 70 Gew.-% und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 bis 20 Gew.-%, besonders bevorzugt 13 bis 18 Gew.-% des trennwirksamen Bestandteils.

Der allgemeine Ausdruck "Klebeband" umfasst dabei in einer Ausführungsform ein Trägermaterial, welches ein- oder beidseitig mit einer Haftklebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge, Mehrschichtanordnungen und dergleichen.
Das Klebeband kann in festen Längen wie zum Beispiel als Meterware oder aber als Endlosware auf Rollen (archimedische Spirale) zur Verfügung gestellt werden.

### Prüfmethoden

Die Messungen werden, wenn nicht anders angegeben, bei einem Prüfklima von 23 ± 1 °C und 50 ± 5 % rel. Luftfeuchte durchgeführt.

### Scherstandzeit (Holding-Power, HP)

Die Scherstandzeit gibt die Verklebungsfestigkeit für eine parallel zum verklebten Band angreifende Belastungskraft an. Sie ist die Zeit, die bis zum völligen Abscheren eines belasteten Klebebandes von einer Stahlplatte gemessen wird.

Zur Bestimmung der HP-Werte wird ein 19 mm breiter Prüfstreifen so auf ein Stahlplättchen geklebt, dass eine Verklebungsfläche von 19 x 20 mm² entsteht. An das überstehende Ende des Klebebandes wird mit Hilfe einer Klammer ein 1-kg-Gewicht gehängt, so dass eine senkrechte Zugkraft von 5,15 N pro 1 cm Bandbreite übertragen wird.

Die Einheit der Scherstandzeit ist Minuten.

### Oberflächenspannung (Oberflächenenergie)

Unter Oberflächenspannung (Oberflächenenergie) versteht man die Grenzflächenspannung von Festkörpern und Flüssigkeiten gegenüber der Dampfphase beziehungsweise Luft.

Die Messung der Oberflächenspannung auf festen Oberflächen erfolgt nach EN 828:1997 mit einem Gerät G2/G402 der Firma Krüss GmbH. Die Oberflächenspannung wird mit der Methode nach Owens-Wendt-Rabel&Kaeble nach Messung des Kontaktwinkels mit deionisiertem Wasser und Diiodmethan bestimmt. Die Werte ergeben sich jeweils aus der Mittlung von vier Messwerten.

### Reißdehnung

Die Reißdehnung wird nach der Prüfmethode AFERA 5004 bestimmt.

### Klebkraft

Die Bestimmung der Klebkraft (gemäß AFERA 5001) wurde wie folgt durchgeführt. Als definierter Haftgrund wurde eine Stahlfläche eingesetzt. Für die Ermittlung der Klebkraft auf Stahl wurde das zu untersuchende Klebeband auf eine Breite von 20 mm und eine Länge von 25 cm zugeschnitten, mit einem Handhabungsabschnitt versehen und unmittelbar danach fünfmal mit einer Stahlrolle von 4 kg bei einem Vorschub von 10 m/min auf den Haftgrund aufgedrückt. Unmittelbar im Anschluss daran wurde das verklebbare Flächenelement in einem Winkel von 180° vom Haftgrund mit einem Zugprüfungsgerät (Firma Zwick) bei einer Abzugsgeschwindigkeit von v=300mm/min abgezogen, und die hierfür bei Normalklima (23 ± 1 °C, 50 ± 5 % rel. Feuchte) benötigte Kraft gemessen. Der Messwert (in N/cm) ergab sich als Mittelwert aus drei Einzelmessungen.

### Rolling Ball Tack

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Normalklima (23 ± 1 °C, 50 ± 5 % rel. Feuchte) gelagert
- Jede Kugel wird nur für eine Messung verwendet.

### Anfassklebrigkeit

Die Bestimmung der Anfassklebrigkeit wurde wie folgt durchgeführt: Als Maß für die Anfassklebrigkeit bei sehr kurzer Kontaktzeit wurde der so genannte "Rolling-Ball-Tack" gemessen. Ein etwa 30 cm langer Streifen des Klebebandes wurde mit der klebenden Seite nach oben unter Spannung horizontal auf der Prüfebene befestigt. Zur Messung wurde die Stahlkugel durch Herabrollen von einer 65 mm hohen Rampe (Neigungswinkel: 21 °) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (das heißt, je kürzer der Rollweg ist, desto höher ist die Anfassklebrigkeit und umgekehrt). Der jeweilige Messwert ergab sich (als Längenangabe in mm) aus dem Mittelwert von fünf Einzelmessungen an jeweils fünf unterschiedlichen Streifen des Klebebandes.

### Abzugskraft nach Anwendung

Damit die Klebemasse schnell und gut auf die Stahlfläche aufziehen kann, wurden die Platten mit dem Klebeband (Breite von 20 mm und Länge 25 cm) beklebt, und dieses mit einem Kunststoffrakel in Längsrichtung zweimal fest angerakelt, danach die Platten vier Tage lang bei 60 °C und einer relativen Luftfeuchte von 90 % im Klimaschrank gelagert. Nach der Klimalagerung wurden die Platten mindestens 8 Stunden im Normalklima (23 ± 1 °C, 50 ± 5 % rel. Feuchte) konditioniert und dann wurde analog zu oben beschriebener Klebkraftprüfung die Abzugskraft nach Anwendung mittels Zugprüfmaschine bestimmt und das arithmetische Mittel (in N/cm) aus drei Einzelmessungen ermittelt.

Im Folgenden wird das erfindungsgemäße Klebeband anhand von Beispielen näher erläutert, ohne die Erfindung damit in irgendeiner Art und Weise einschränken zu wollen.

### Beispiele

### Beispiel 1

### (Herstellung eines gekreppten Haftklebebandes mit einer hart transparenten PLA-Folie)

Eine einschichtige Folie bestehend aus 99,2 Gew.-% Polymilchsäure wie beispielsweise Ingeo 4032D der Firma NatureWorks und 0,8 Gew.-% Irganox 1010 (Tetrakis-(methylene-(3,5=di-(tert)-butyl-4-hydrocinnamate))methan; CAS No. 6683-19-8 (sterisch gehindertes Phenol), BASF) wird auf einer Einschneckenextrusionsanlage mit einer Flachdüse extrudiert. Die Foliendicke beträgt 50 µm. Alle Walzen der Anlage sind mit einem Antrieb versehen. Die so hergestellte Folie wird anschließend über ein Walzensystem durch ein Wasserbad geführt, um den Kreppvorgang an einer folgenden Vakuumtrommel zu erleichtern, und dann an eine beheizbare Vakuumtrommel mit Saugöffnungen herangeführt. Die Saugöffnungen der beheizbaren zylindrischen Vakuumtrommel sind linienförmig entlang der Breite der Vakuumtrommel angeordnet. Die Vakuumtrommel wird auf 180 °C temperiert. Die an der Vakuumtrommel anliegende Folie wird vor dem Abziehen mit einem Rakel gestaucht, was zu einer Kreppung des Folienmaterials führt. Die Folie wird dann von einer Kühlwalze übernommen, in eine Kühlzone eingefahren und mit einem nachfolgenden Walzensystem aufgewickelt. Das Maß der Kreppung wird über die Rotationsgeschwindigkeiten der Vakuumtrommel und der nachfolgenden Wickeltrommel geregelt.

Die so hergestellte Folie wird im Anschluss auf der zu beschichtenden Seite einer Corona-Vorbehandlung unterzogen (60 Wmin/m²), so dass die Oberflächenenergie oberhalb 38 mN/m (38 dyn/cm) liegt. Anschließend wird über ein Kaschierwerk eine Polyesterhaftklebemasse, beispielsweise basierend auf 99,4 Gew.-% Lio Opto FR-102 (Toyo Ink) vernetzt mit 0,6 Gew.-% Oribain BXX 5627, zukaschiert. Das so beschichtete Material wird vor dem Aufrollen mit einem silikonisierten Trennpapier eingedeckt.

| | |
|---|---|
| Reißdehnung: | 20 % |
| Klebkraft Stahl: | 3,5 N/cm |
| Scherstandzeit bei 1 kg Belastung: | 4150 min |

### Beispiel 2

### (Herstellung eines gekreppten Haftklebebandes mit einer weicheren PLA-Folie)

Eine silikonisierte PLA-Folie (UV-vernetzt) der Firma Huhtamaki (Qualität 75496) mit einer Dicke von 30 µm wird über ein Abrolleinrichtung und ein Walzensystem durch ein Wasserbad geführt, um einen folgenden Kreppvorgang zu erleichtern. Alle Walzen der Anlage sind mit einem Antrieb versehen. Die Folie wird anschließend an eine beheizbare Vakuumtrommel mit Saugöffnungen herangeführt. Die Saugöffnungen der beheizbaren zylindrischen Vakuumtrommel sind linienförmig entlang der Breite der Vakuumtrommel angeordnet. Die Vakuumtrommel wird auf 65 °C temperiert. Die an der Vakuumtrommel anliegende Folie wird vor dem Abziehen mit einem Rakel gestaucht, was zu einer Kreppung des Folienmaterials führt. Die Folie wird dann von einer Kühlwalze übernommen, in eine Kühlzone eingefahren und mit einem nachfolgenden Walzensystem aufgewickelt. Das Maß der Kreppung wird über die Rotationsgeschwindigkeiten der Vakuumtrommel und der nachfolgenden Wickeltrommel geregelt.

Die so hergestellte Folie wird im Anschluss auf der zu beschichtenden Seite einer Corona-Vorbehandlung unterzogen (60 Wmin/m²), so dass die Oberflächenenergie oberhalb 38 mN/m liegt. Anschließend wird über ein Kaschierwerk eine wasserlösliche Polyacrylathaftklebemasse analog DE 31 05 894 A1, Beispiel 4 zukaschiert. Das so beschichtete Material wird anschließend zur Rolle gewickelt.

| | |
|---|---|
| Reißdehnung: | 25 % |
| Klebkraft Stahl: | 2,8 N/cm |
| Scherstandzeit bei 500 g auf Streichrohpapier: | 35 min |

## Patentansprüche

1. Verwendung eines gekreppten Polymilchsäureträgers als Trägermaterial in einem Klebeband, das zum temporären Abdecken und Schützen des mit dem Klebeband ausgerüsteten Untergrunds dient, wobei das Trägermaterial zumindest einseitig mit einer Klebebeschichtung versehen ist und wobei der Polymilchsäureanteil im Trägermaterial größer oder gleich 50 Gew.-% ist.

2. Verwendung nach Anspruch 1,
**dadurch gekennzeichnet, dass**
der Polymilchsäureträger eine höhere Längs-Dehnbarkeit als Quer-Dehnbarkeit aufweist.

3. Verwendung nach Anspruch 1 oder 2,
**dadurch gekennzeichnet, dass**
das Trägermaterial bevorzugt aus reiner Polymilchsäure besteht, aus Polymilchsäure/Polyester-Compounds, aliphatisch-aromatische Copolyester, Polyhydroxyalkanoaten (PHA), Polybutylenadipatterephthalat (PBAT), Polybutylensuccinat (PBS), Stärke oder Cellulose oder auch aus Compounds untereinander oder Compounds mit Polyolefinen oder ölen.

4. Verwendung nach zumindest einem der Ansprüche 1 bis 3,
**dadurch gekennzeichnet, dass**
der Polymilchsäureanteil im Träger zwischen 50 und 99,9 Gew.-%, bevorzugt zwischen 65 bis 99,9 Gew.-% und besonders bevorzugt zwischen 80 und 99,9 Gew.-% ist.

5. Verwendung nach zumindest einem der vorherigen Ansprüche,
**dadurch gekennzeichnet, dass**
die Klebemasse eine lösemittelbasierte oder lösemittelfreie Selbstklebemasse ist, vorzugsweise basierend auf Naturkautschuk, Polyacrylaten, Styrolblockcopolymeren, Ethylenvinylacetat, Polyurethan, Poly-alpha-olefinen, Polyisobutylen, Styrol-Butadien-Kautschuk, vorzugsweise eine biologisch abbaubare Selbstklebemasse wie eine Polyester- oder Polyurethanhaftklebemasse.

6. Verwendung nach zumindest einem der vorherigen Ansprüche,
**dadurch gekennzeichnet, dass**
das Trägermaterial in Längsrichtung eine Bruchdehnung von mindestens 15 %, bevorzugt aber mindestens 20 % und in Querrichtung eine Bruchdehnung von mindestens 5 %, bevorzugt aber mindestens 10 % und ganz bevorzugt mindestens 15 % aufweist.

7. Verwendung nach zumindest einem der vorherigen Ansprüche,
**dadurch gekennzeichnet, dass**
das Flächengewicht des Trägermaterials bei 35 bis 250 g/m², bevorzugt bei 50 bis 200 g/m², ganz bevorzugt bei 70 bis 150 g/m² liegt.

8. Klebeband mit einem gekreppten Polymilchsäureträger als Trägermaterial, insbesondere zum temporären Abdecken und Schützen des mit dem Klebeband ausgerüsteten Untergrunds, wobei das Trägermaterial zumindest einseitig mit einer vorzugsweise biologisch abbaubaren Klebebeschichtung versehen ist und wobei der Polymilchsäureanteil im Trägermaterial größer oder gleich 50 Gew.-% ist.

## Claims

1. Use of a creped polylactic acid carrier as carrier material in an adhesive tape serving for temporary lining and protection of the substrate furnished with the adhesive tape, where the carrier material is provided at least on one side with an adhesive coating and where the polylactic acid fraction in the carrier material is greater than or equal to 50 wt%.

2. Use according to Claim 1, **characterized in that** the polylactic acid carrier has a higher machine-direction stretchability than cross-direction stretchability.

3. Use according to Claim 1 or 2, **characterized in that** the carrier material consists preferably of pure polylactic acid, of compounded polylactic acid/polyester formulations, aliphatic-aromatic copolyesters, polyhydroxyalkanoates (PHA), polybutylene adipate terephthalate (PBAT), polybutylene succinate (PBS), starch or cellulose, or else of compounded formulations with one another or compounded formulations with polyolefins or oils.

4. Use according to at least one of Claims 1 to 3, **characterized in that** the polylactic acid fraction in the carrier is between 50 and 99.9 wt%, preferably between 65 to 99.9 wt% and more preferably between 80 and 99.9 wt%.

5. Use according to at least one of the preceding claims, **characterized in that** the adhesive is a solvent-based or solvent-free self-adhesive, preferably based on natural rubber, polyacrylates, styrene block copolymers, ethylene-vinyl acetate, polyurethane, poly-alpha-olefins, polyisobutylene, styrene-butadiene rubber, preferably a biodegradable self-adhesive such as a pressure-sensitive polyester or polyurethane adhesive.

6. Use according to at least one of the preceding claims, **characterized in that** the carrier material has an elongation at break in machine direction of at least 15%, but preferably at least 20%, and an elongation at break in cross direction of at least 5%, but preferably at least 10% and very preferably at least 15%.

7. Use according to at least one of the preceding claims, **characterized in that** the basis weight of the carrier material is 35 to 250 g/m², preferably 50 to 200 g/m², very preferably 70 to 150 g/m².

8. Adhesive tape having a creped polylactic acid carrier as carrier material, especially for temporary lining and protection of the substrate furnished with the adhesive tape, where the carrier material is provided at least on one side with a preferably biodegradable adhesive coating and where the polylactic acid fraction in the carrier material is greater than or equal to 50 wt%.

## Revendications

1. Utilisation d'un support à base d'acide polylactique crêpé en tant que matériau support dans une bande adhésive, qui sert au recouvrement et à la protection temporaires du substrat équipé de la bande adhésive, le matériau support étant muni au moins d'un côté d'un revêtement adhésif et la proportion d'acide polylactique dans le matériau support étant supérieure ou égale à 50 % en poids.

2. Utilisation selon la revendication 1, **caractérisée en ce que** le support à base d'acide polylactique présente une extensibilité longitudinale supérieure à l'extensibilité transversale.

3. Utilisation selon la revendication 1 ou 2, **caractérisée en ce que** le matériau support est de préférence constitué d'acide polylactique pur, de composés acide polylactique/polyester, de copolyesters aliphatiques-aromatiques, de polyhydroxyalcanoates (PHA), de polyadipate-téréphtalate de butylène (PBAT), de polysuccinate de butylène (PBS), d'amidon ou de cellulose ou également de composés les uns avec les autres ou de composés avec des polyoléfines ou des huiles.

4. Utilisation selon au moins l'une quelconque des revendications 1 à 3, **caractérisée en ce que** la proportion d'acide polylactique dans le support est comprise entre 50 et 99,9 % en poids, de préférence entre 65 et 99,9 % en poids et de manière particulièrement préférée entre 80 et 99,9 % en poids.

5. Utilisation selon au moins l'une quelconque des revendications précédentes, **caractérisée en ce que** le matériau adhésif est un matériau auto-adhésif à base de solvant ou sans solvant, de préférence à base de caoutchouc naturel, de polyacrylates, de copolymères séquencés de styrène, d'éthylène-acétate de vinyle, de polyuréthane, de poly-alpha-oléfines, de polyisobutylène, de caoutchouc de styrène-butadiène, de préférence un matériau auto-adhésif biodégradable tel qu'un matériau adhésif sensible à la pression à base de polyester ou de polyuréthane.

6. Utilisation selon au moins l'une quelconque des revendications précédentes, **caractérisée en ce que** le matériau support présente dans la direction longitudinale un allongement à la rupture d'au moins 15 %, de préférence toutefois d'au moins 20 % et dans la direction transversale un allongement à la rupture d'au moins 5 %, de préférence toutefois d'au moins 10 % et tout préférentiellement d'au moins 15 %.

7. Utilisation selon au moins l'une quelconque des revendications précédentes, **caractérisée en ce que** le poids superficiel du matériau support est de 35 à 250 g/m², de préférence de 50 à 200 g/m², tout préférentiellement de 70 à 150 g/m².

8. Bande adhésive comprenant un support à base d'acide polylactique crêpé en tant que matériau support, notamment pour le recouvrement et la protection temporaires du substrat équipé de la bande adhésive, le matériau support étant muni au moins d'un côté d'un revêtement adhésif de préférence biodégradable et la proportion d'acide polylactique dans le matériau support étant supérieure ou égale à 50 % en poids.
